# EUROPEAN PATENT APPLICATION

(11) **EP 4 135 384 A1**
(43) Date of publication of application: **15.02.2023**
(21) Application number: 21190318.2
(22) Date of filing: 09.08.2021
(51) Int. Cl.: H04W 24/02, H04W 24/10

(54) **USER DEVICES OF MOBILE COMMUNICATION SYSTEMS**

(71) Applicant: Nokia Technologies Oy, 02610 Espoo (FI)
(72) Inventor: GUNDOGAN, Alperen, Munich (DE); AWADA, Ahmad, Munich (DE); KHATIBI, Sina, Munich (DE); SPAPIS, Panagiotis, Munich (DE); VIERING, Ingo, Munich (DE); GÜRSU, Halit Murat, Munich (DE)
(74) Representative: Nokia EPO representatives

(57) **Abstract**

An apparatus, method and computer program is described comprising: detecting rotation of a multi-panel user device of a mobile communication system; detecting a mobility event; and generating a report indicating whether a rotation is detected during the detected mobility event.

## Description

### Field

The present specification relates to user devices of mobile communication systems. In particular, the specification relates to features of Mobility Robustness Optimisation.

### Background

Mobility Robustness Optimisation is a method for detection and correction of errors in mobility configuration that can of use to user devices of mobile communication systems. There remains a need for further developments in the field.

### Summary

In a first aspect, this specification describes an apparatus comprising means for performing: detecting rotation of a user device (e.g. a multi-panel user device) of a mobile communication system; detecting a mobility event (such as a handover); and generating a report indicating whether a rotation is detected during the detected mobility event or in a defined period before and/or after the mobility event. The said defined period may be a programmable parameter (in other example embodiments, the defined period may be pre-set and may be fixed).

The rotation of the user device may be detected using one or more sensors (e.g. a gyroscope) of the user device.

Some example embodiments further comprise means for performing: determining whether a rotation event occurs during the mobility event or in the defined period before and/or after the mobility event.

In some example embodiments, the means for performing detecting rotation may comprise means for performing: determining whether a rotation event occurs during a random access procedure.

In some example embodiments, the report is, or is appended to, a radio link failure report or a handover report. Thus, for example, the report may be appended to an existing report form (e.g. an RLF report).

The report may comprise a Boolean flag indicating whether rotation is detected during said mobility event or in the defined period before and/or after the mobility event. Alternatively, or in addition, the report may comprise rotation data of said user device. The said rotation data may comprises one or more of: angular speed or velocity of the user device (e.g. average speed); a number of rotation events in a relevant time period; a type of rotation(s); and duration of rotation(s).

In a second aspect, this specification describes an apparatus (e.g. a user device) comprising means for performing: sending an information message from a user device of a mobile communication to a network node of the mobile communication system, wherein the information message includes an indication of a multi-panel type of the user device. The information message may be a UEAssistanceInformation message. The indication may be a Boolean flag indicating a device type. The information message may be sent in response to a mobility event (such as a handover).

Some example embodiments further comprise means for performing: receiving a multi-panel type request from the network node, wherein the information message is provided in response to the user information request.

In some example embodiments, the multi-panel type may include: a first type in which user device rotations and/or blockages are de-coupled from movement of a device or user holding the user device; and a second type in which user device rotations and/or blockages are coupled with movement of the device or user holding the user device. The first type may lead to non-stationary mobility KPIs. The second type may lead to stationary mobility KPIs.

In a third aspect this specification describes an apparatus (e.g. a network node) comprising means for performing: receiving, at a network node of a mobile communication system, an information message from a user device of the mobile communication system, wherein the information message includes an indication of a multi-panel type of the user device.

Some example embodiments further comprise means for performing: sending a multi-panel type request from the network node to the user device, wherein the information message is provided in response to the multi-panel type request.

In some example embodiments, the multi-panel type includes: a first type in which user device rotations and/or blockages are de-coupled from movement of a device or user holding the user device; and a second type in which user device rotations and/or blockages are coupled with movement of the device or user holding the user device. The first type may lead to non-stationary mobility KPIs. The second type may lead to stationary mobility KPIs.

In any of the first to third aspects, the means comprise: at least one processor; and at least one memory including computer program code, the at least one memory and computer program code configured to, with the at least one processor, cause the performance of the apparatus.

In a fourth aspect, this specification describes a method comprising: detecting rotation of a multi-panel user device of a mobile communication system; detecting a mobility event (such as a handover); and generating a report indicating whether a rotation is detected during the detected mobility event or in a defined period before and/or after the mobility event. The said defined period may be a programmable parameter (in other example embodiments, the defined period may be pre-set and may be fixed).

Some example embodiments further comprise: determining whether a rotation event occurs during the mobility event or in the defined period before and/ or after the mobility event.

In some example embodiments, detecting rotation may comprise determining whether a rotation event occurs during a random access procedure.

In a fifth aspect, this specification describes a method comprising: sending an information message from a user device of a mobile communication to a network node of the mobile communication system, wherein the information message includes an indication of a multi-panel type of the user device. The indication may be a Boolean flag indicating a device type. The information message may be sent in response to a mobility event (such as a handover).

Some example embodiments further comprise receiving a multi-panel type request from the network node, wherein the information message is provided in response to the user information request.

In a sixth aspect, this specification describes a method comprising: receiving, at a network node of a mobile communication system, an information message from a user device of the mobile communication system, wherein the information message includes an indication of a multi-panel type of the user device. Some example embodiments further comprise: sending a multi-panel type request from the network node to the user device, wherein the information message is provided in response to the multi-panel type request.

In a seventh aspect, this specification describes an apparatus configured to perform (at least) any method as described with reference to the fourth to sixth aspects.

In an eighth aspect, this specification describes computer-readable instructions which, when executed by a computing apparatus, cause the computing apparatus to perform (at least) any method as described with reference to the fourth to sixth aspects.

In a ninth aspect, this specification describes a computer-readable medium (such as a non-transitory computer-readable medium) comprising program instructions stored thereon for performing (at least) any method as described with reference to the fourth to sixth aspects.

In a tenth aspect, this specification describes an apparatus comprising: at least one processor; and at least one memory including computer program code which, when executed by the at least one processor, causes the apparatus to perform (at least) any method as described with reference to the fourth to sixth aspects.

In an eleventh aspect, this specification describes a computer program comprising instructions for causing an apparatus to perform at least the following: detecting rotation of a multi-panel user device of a mobile communication system; detecting a mobility event; and generating a report indicating whether a rotation is detected during the detected mobility event or in a defined period before and/or after the mobility event.

In a twelfth aspect, this specification describes a computer program comprising instructions for causing an apparatus to perform at least the following: sending an information message from a user device of a mobile communication to a network node of the mobile communication system, wherein the information message includes an indication of a multi-panel type of the user device.

In a thirteenth aspect, this specification describes receiving, at a network node of a mobile communication system, an information message from a user device of the mobile communication system, wherein the information message includes an indication of a multi-panel type of the user device. Some example embodiments further comprise: sending a multi-panel type request from the network node to the user device, wherein the information message is provided in response to the multi-panel type request.

In a fourteenth aspect, this specification describes an apparatus comprising: a sensor (or some other means) for detecting rotation of a multi-panel user device of a mobile communication system; a control module (or some other means) for detecting a mobility event; and an output module (or some other means) for generating a report indicating whether a rotation is detected during the detected mobility event or in a defined period before and/or after the mobility event.

In a fifteenth aspect, this specification describes an apparatus comprising an output (or some other means) for sending an information message from a user device of a mobile communication to a network node of the mobile communication system, wherein the information message includes an indication of a multi-panel type of the user device.

In a sixteenth aspect, this specification describes an apparatus comprising an input (or some other means) for receiving, at a network node of a mobile communication system, an information message from a user device of the mobile communication system, wherein the information message includes an indication of a multi-panel type of the user device.

### Brief Description of Drawings

Example embodiments will now be described, by way of non-limiting examples, with reference to the following schematic drawings, in which:
FIGS. 1 to 4 are block diagrams of mobile communication systems in accordance with example embodiments;
FIGS. 5 and 6 are flow charts of algorithms in accordance with example embodiments;
FIGS. 7 and 8 shows message flow sequences in accordance with example embodiments;
FIG. 9 is a block diagram of components of a system in accordance with an example embodiment; and
FIGS. 10 shows tangible media storing computer-readable code which when run by a computer may perform methods according to example embodiments described above.

### Detailed Description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

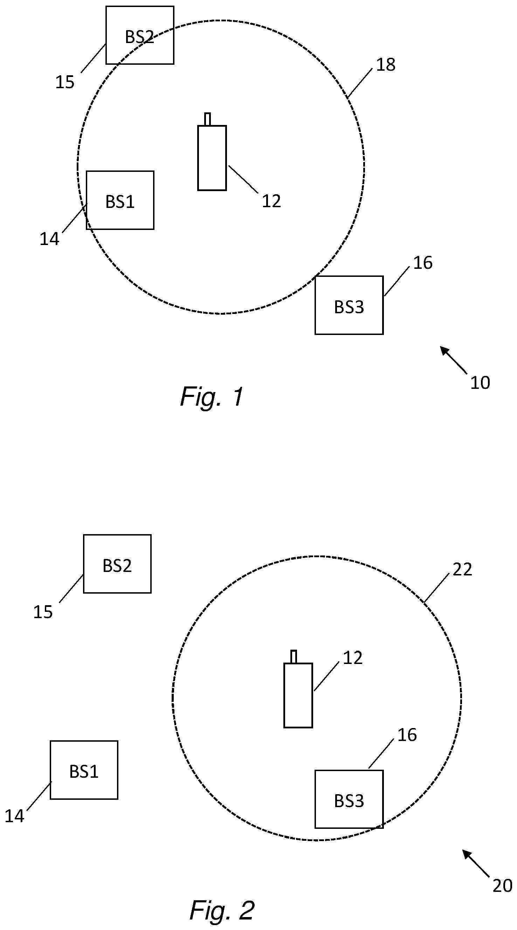

FIG. 1 is a block diagram, indicated generally by the reference numeral 10, of a mobile communication system in accordance with an example embodiment. The mobile communication system 10 comprises a user device 12, a first base station (BS1) 14, a second base station (BS2) 15 and a third base station (BS3) 16. The user device 12 has an antenna pattern 18 that defines an area over which communications between the user device and a base station are possible. As can be seen, in FIG. 1, the first base station 14 is within the area 18, the second base station 15 in on the edge of the area 18 and the third base station 16 is outside the area 18. Accordingly, the user device 12 may preferentially communicate with the first base station 14.

FIG. 2 is a block diagram, indicated generally by the reference numeral 20, of a mobile communication system in accordance with an example embodiment. The mobile communication system 20 comprises the user device 12, the first base station (BS1) 14, the second base station (BS2) 15 and the third base station (BS3) 16. In the system 20, the user device 12 has moved so that an antenna pattern 22 that defines an area over which communications between the user device and a base station are possible is different to the area 18. In the system 20, the first and second base stations 14 and 15 are outside the area 22 and the third base station 16 is within the area 22. Accordingly, the user device 12 now preferentially communicates with the third base station 16.

A handover is required to enable the user device 12 to switch from communicating with the first base station 14 (in the system 10) to communicating with the third base station 16 (in the system 30).

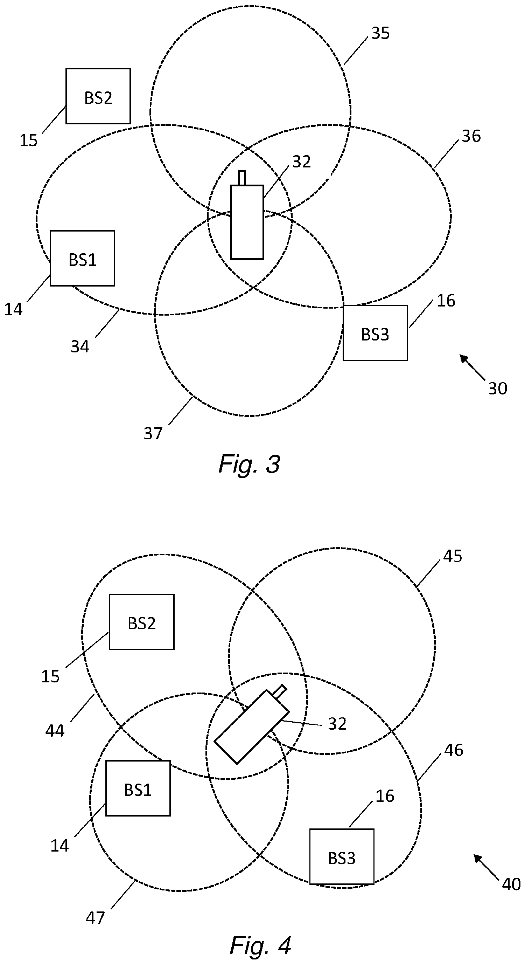

FIG. 3 is a block diagram, indicated generally by the reference numeral 30, of a mobile communication system in accordance with an example embodiment. The mobile communication system 30 comprises the first base station (BS1) 14, the second base station (BS2) 15 and the third base station (BS3) 16 described above and further comprises a user device 32.

The user device 32 is a multi-panel user equipment (MPUE) having first to fourth antenna patterns 34 to 37 available for communications with base stations. In the system 30, the first base station 14 is within the first antenna pattern 34, but the second and third base stations 15 and 16 are outside all of the antenna patterns. Accordingly, the user device 32 preferentially communicates with the first base station 14.

FIG. 4 is a block diagram, indicated generally by the reference numeral 40, of a mobile communication system in accordance with an example embodiment. The mobile communication system 40 comprises the user device 32, the first base station (BS1) 14, the second base station (BS2) 15 and the third base station (BS3) 16 described above. In the system 40, the user device 32 is in the same position as in the system 30, but has rotated relative to the base stations such that the user device 32 has first to fourth antenna patterns 44 to 47 that are different to the antenna patterns 34 to 37 described above.

As a result of the rotation of the user device 32, in the system 40, the first base station 14 is within the fourth antenna pattern 47, the second base station 15 is within the first antenna pattern 44 and the third base station 16 is within the third antenna pattern 16. Accordingly, the user device 32 may communicate with any of the first to third base stations 14 to 16. However, although the user device 32 could keep communicating with the first base station 14, it would need to change antenna to do so. If the user device 32 decide to keep using the same antenna for base station communications, then it will be necessary to communicate with the second base station 15. In the system 40, a handover is required in the event that the signal strength of second base station is higher (e.g. by an offset amount) than the signal strength of the first base station.

Mobility robustness optimization (MRO) is a method for detection and correction of errors in mobility configurations. In general terms, MRO seeks to guarantee proper mobility, that is, proper handovers in connected mode and proper cell re-selection in idle mode. Thus, MRO can be used to ensure a proper handover between the scenario of the system 10 and the scenario of the system 20 and also between the scenario of the system 30 and the scenario of the system 40.

By way of example, the MRO may have the following goals, possibly in this order of importance:
- Minimise call drops;
- Minimise Radio Link Failures (RLF);
- Minimise unnecessary handovers; and
- Minimise idle mode problems.

The mobility robustness optimisation (MRO) problem can be split into two subtasks:
- Root cause identification/evaluation of the mobility failure; and
- Adjustment of the mobility parameters.

In the root cause identification/evaluation, the cell responsible for a specific mobility problem is identified and the type of mobility problem is classified, for example into one of the following Key Performance Indications (KPIs):
- Too late handovers;
- Too early handovers;
- Handovers to wrong cells; and
- Unnecessary handovers.

As a result, 3GPP (starting from Release 9) has introduced a Radio Link Failure (RLF) report, Handover (HO) report, and RLF indication to be exploited for root cause evaluation. Once the cause of a problem is identified, mobility parameters can be optimized by vendor-specific algorithms, e.g. by adjusting cell individual offsets, time-to-trigger (TTT) values, or filter coefficients. The mobility parameters may be updated iteratively over time.

It should be noted that not all user devices behave in the same way. To address this, group-based MRO enables user devices to be placed into groups and MRO performed differently depending on the group in which a particular user device belongs.

Group-based MRO applies MRO principles to a group of user devices. From "Mobility Information" Information Element (IE) in the handover report (e.g. a Handover Report message defined in TS 36.423/TS 38.423) a source cell A can check which mobility group a failed UE belongs to (examples of mobility groups could be (1) slow or fast UE or (2) UEs in different slices, etc.). The UE mobility grouping may be implementation specific and transparent to the target cell. The mobility information can be useful if source cell A applies different mobility parameters or strategy for different groups of UEs. The mobility information is included by source cell A in the handover request to target cell B which is then stored by target B with the UE context.

By way of example, assume that a network serves two slices A and B (which can be considered as groups A and B respectively). Each time the source cell prepares a handover, it can encode the group of the UE as part of the Mobility Information, e.g., 01 to indicate that the UE belongs to group A and 10 for group B. Using this information, all the mobility key performance indicators (KPIs) (such as too early or too late or handover to wrong cell) can be classified per group since the source cell knows to which group the UE belongs even after the handover is successfully completed.

In LTE and NR FR1, the frequency is much smaller compared to FR2 and the UEs are typically omni-directional which makes them less sensitive to rotations and hand blockages. UEs with multiple panels in FR2, also referred to as Multi-Panel UEs (MPUEs), may have different directivity on the panels, in particular at higher frequencies. Every panel of those UEs may see (i.e. measure) a different radio environment, i.e. different set of relevant base stations. Moreover, they are more susceptible to blockages caused by hands/obstacles which can cause a high and rapid degradation of the signal power and quality.

Group-based MRO may enable better root-cause analysis of mobility failures by distinguishing between different user device types and may also enable separate mobility parameter optimisation for different user device types. Thus, mobility performance and MRO stability can be improved.

By way of example, two types of multi-panel user equipments (MPUEs) are identified:
- Type 1: MPUEs where rotations/blockages are random. These include handheld MPUEs.
- Type 2: MPUEs whose rotations/blockages are predictable and could with device movement. These include UEs mounted within a device (such as a car). For example, if a radio link failure occurs when the car turns a particular corner, a similar failure can be expected in other vehicles turning the same corner.

Parameters for different user device types (e.g. Type 1 and Type 2 discussed above) can be collected separately and used to train different models. However, current systems do not have a mechanism to distinguish between different UE types.

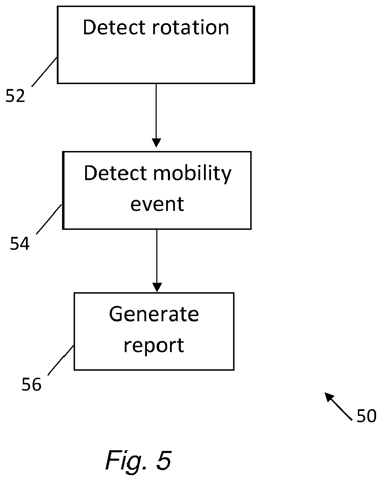

FIG. 5 is a flow chart of an algorithm, indicated generally by the reference numeral 50. in accordance with an example embodiment.

The algorithm 50 starts at operation 52, where a rotation of a user device of a mobile communication system is detected. The rotation may be detected using one or more sensors of the user device (such as a gyroscope) or in some other way. Rotation information, such as angular speed of the user device (e.g. degrees/second) may be captured as part of the operation 52.

By way of example, the user device may be a multi-panel user device, such as the user device 32 described above. Thus, the algorithm 50 may detect the rotation of the user device 32 from the position shown in the system 30 to the position shown in the system 40.

At operation 54 of the algorithm 50, a mobility event is detected. As discussed further below, the mobility event may take many forms, such as the triggering of a measurement report, a handover, a start of a T310 timer etc.

At operation 56, a report is generated indicating whether a rotation is detected during the detected mobility event.

The algorithm 50 provides a mechanism to enable rotation information to be communicated. In the event that a multi-panel user device is being used, then the report generated in the operation 56 can be used by a network node to determine information regarding the detection (e.g. whether the user deice is a Type 1 or Type 2 device, as discussed above).

In an implementation of the algorithm 50, a user device may detect rotation on-the-fly and append rotation information to a radio link failure (RLF) or similar report. The user device rotation may be detected (in the operation 54) during a mobility event (e.g. in a short time period before and/or after the event).

The operation 56 may be implemented by a user device adding an indication of a rotation to RLF/successful HO report if the user device detects rotation during a defined number of seconds (e.g. X seconds) before/after any mobility event. The duration of X can be:
- preconfigured in the user device (e.g. in the USIM);
- configured by the network; or
- left to user device implementation. For example, the duration may be relevant to the UE panel design/architecture (e.g. number of antenna elements, antenna gain, MPUE assumption etc.).

The report (e.g. RLF/HO report) generated in the operation 56 might include one or more of the following:
- A Boolean Flag, set to true if user device detects rotation in one of the mobility events discussed above. For example, the user device might apply a threshold based on rotation speed e.g. degrees/second to set the value of flag. Thus, for example, if rotation speed is higher than a threshold, then the user device may set the flag to true.;
- Angular speed; for example the speed of rotation during the X ms period can be included directly instead of (or in addition to) a flag. For example, the user device may calculate an average angular speed of rotation during random access. In one example embodiment, if the handover is successful, the variable X ms may be the time between first random access message e.g. msg 1 until RRCReconfiguration complete message, but if the handover is not successful, X ms may be the same as the duration of t304 timer;
- Number, time and type of the rotation events during mobility events.

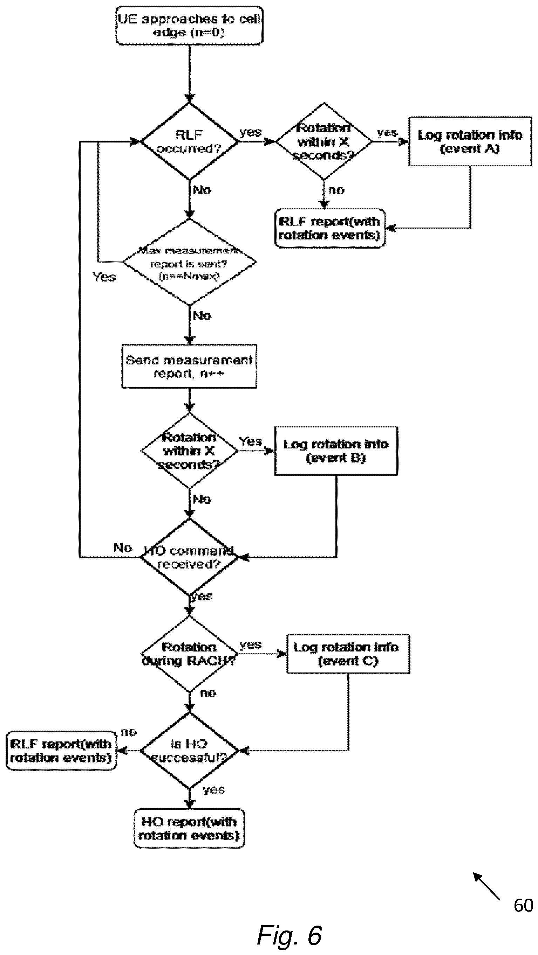

FIG. 6 is a flow chart of an algorithm, indicated generally by the reference numeral 60. in accordance with an example embodiment. The algorithm shows an approach to generating a report in the operation 56 for a number of different types of mobility event (as detected in the operation 54).

In the event of a baseline handover, rotation can be detected during X ms before RLF occurs (i.e. rotation event A in the algorithm 60), a T310 timer may be used, wherein if the user device rotates while T310 timer is running (the timer is initiated after N consecutive Qout from the physical layer), the user device might end up with RLF. The duration of X can be scaled based on the duration of T310 timer.

Alternatively, in the event of a baseline handover, rotation can be detected during X ms before the measurement is sent (i.e. rotation event B in the algorithm 60). The handover might be triggered due to rotation (serving cell link quality diminishes faster), and handover to the target cell might not be successful due to rotation and UE declares a handover failure (HOF). The RLF report is prepared for the HOF and rotation information can be also added as a part of the HOF. In addition, the UE might end up with the pingpongs and includes rotation info to the successful HO report.

In another embodiment, the user device may include the Boolean flag and angular speed in the measurement report that is sent to a network node (e.g. a serving cell). The user device can be configured to report the angular speed, if the angular speed is above a certain threshold.

Rotation can be detected during a random access procedure to the target cell after a HO command is received (e.g. rotation type C in FIG. 6). RACH can be performed either contention based (CBRA) i.e. UE selected preamble or contention free (CFRA) i.e. gNB selects preamble depending on whether the network is allocated resources for the random access of the UE and sent as a part of the HO command. RACH is initiated with Msg 1 i.e. Preamble transmission and in the case of CFRA, RACH is completed once UE receives Msg 2 i.e. Random Access Response (RAR). In the case of CBRA, the transmissions of Msg 3 (from UE to the network) and Msg 5 (from the network to the UE) may be required for contention resolution. Thus, the RACH procedures ends once UE receives Msg 4 for CBRA. The user device can send this rotation information either in RLF report or successful HO report depending on the result of handover success.

In the event of a Conditional Handover (CHO), all the rotation events of baseline handover described above may be included. In addition, the rotation between preparation and execution can be also included as a part RLF/HO report. The user device may, for example, be configured to report if a rotation is detected X seconds within a CHO trigger

Mobility Robustness Optimisation (MRO) may involve acquiring mobility related key performance indicators (KPIs) from the network (e.g., HOF and RLF or ping-pong HO) and optimizing mobility parameters accordingly. An assumption for MRO may be that the mobility KPI values collected within a KPI collection period is (almost) stationary, i.e., the mobility KPI values are observed in different KPI collection periods (when the collection is re-started). Stationary KPIs may arise if the users/device holding a UE move on pre-defined streets experiencing certain radio propagation conditions which are recurring with each user/device crossing the same street and this assumes that user mobility performance doesn't change. Stable user mobility performance can be achieved thanks to the omni-directional antenna of the UE and low frequency in FR1. However, for MPUE in FR2 these assumptions may not be true.

FR2 UEs are equipped with multiple panels with directive gain. As discussed above, this creates a different behaviour compared to omni-directional antennas of previous generations or FR1. Abrupt rotations may hinder the mobility performance of the UE. For this we need to look at the rotation characteristics of a FR2 UE. As noted above, one can differentiate between (at least) two types of multi-panel user equipments (MPUEs) in FR2:
- Type 1: MPUEs whose rotations/blockages are random and de-coupled from the movement of the device/user holding the user device. One example of type 1 is a handheld user device whose radio reception might change sporadically and randomly if rotated or obstructed by a hand or other user body parts; resulting in less-stationary mobility KPIs which is challenging to address by MRO mechanism.
- Type 2: MPUEs whose rotations/blockages are predictable and coupled with the movement of the device comprising the user device or where the user device is attached to. One example of type 2 is a user device mounted on a device, vehicle, car, drone, Automated Guided Vehicle (AGV) or the like. If the radio link connection of the user device on the vehicle experiences a failure when the vehicle turns around a street corner, then it is expected all other vehicles crossing the same street corner to have the same mobility failure. This results in stationary mobility KPIs which is less challenging to address by MRO.

Collecting the values of KPIs from all MPUEs (type 1 and type 2) in FR2 may lead to degradation of MRO performance or to convergence issues as KPI values of type 1 UEs are not highly stationary. Even if collecting KPIs separately for type 1 and type 2 might not be enough to ensure good MRO performance as the network does not know whether a mobility failure is caused by the UE rotation or wrong optimization of mobility parameters.

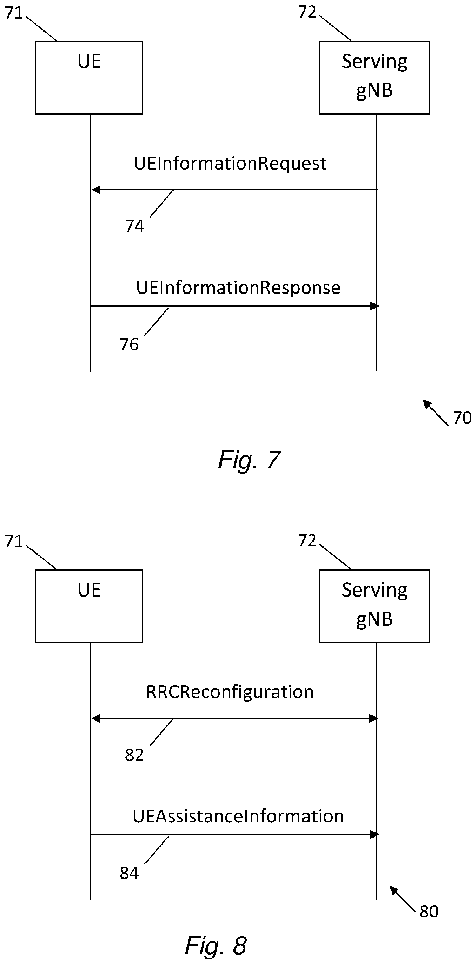

FIG. 7 shows a message flow sequence, indicated generally by the reference numeral 70, in accordance with an example embodiment. The message flow sequence 70 shows messages sent between a user device 71 of a mobile communication system and a network node 72 of the mobile communication system. In the example message 70, the network node 72 is a serving gNB, although this is not essential to all example embodiments.

The message sequence 70 may be carried out following an RRC connection being set up in a cell (UE moving from RRC idle to RRC connected), resumed (UE moving from RRC inactive to RRC connected) or re-established in another cell (after a failure).

The message sequence 70 starts with the network node 72 sending a request message 74 (UEInformationRequest) indicating to the user device 71 to send its Multi-Panel User Equipment (MPUE) type. The request message 74 may, for example, be sent in response to a mobility event, such as a handover. Upon reception of the message 74, the user device 71 sends an information message 76 to the network node including an indication of the multi-panel type of the user device.

As discussed above, the multi-panel type (to be included in the message 76) may include:
- A first type in which user device rotations and/or blockages are de-coupled from movement of a device or user holding the user device. These may lead to non-stationary mobility KPIs; and
- A second type in which user device rotations and/or blockages are coupled with movement of the device or user holding the user device. These may lead to stationary mobility KPIs.

To distinguish between the two types, a Boolean flag can be used such as MPUEtype = {0,1} where 0 and 1 indicates the MPUE type 1 and 2, respectively. Alternatively, an enumerated Information Element (IE) could be used such as MPUE_type = {type 1, type 2 }.

FIG. 8 shows a message flow sequence, indicated generally by the reference numeral 80, in accordance with an example embodiment. The message flow sequence 80 shows messages sent between the user device 71 and the network node 72 described above. In the example message 80, the network node 72 is a serving gNB, although this is not essential to all example embodiments.

The algorithm 80 starts with an exchange of RRC reconfiguration message 82 between the user device 71 and the network node 72. Following RRC reconfiguration, the user device 71 sends an information message 84 (UEAssistanceInformation message) to the network node 72. The information message 84 includes an indication of a multi-panel type of the user device. As discussed above, the indication may, for example, be a Boolean flag indicating a device type (e.g. Type 1 or Type 2, as discussed above) and/or an enumerated information element (IE).

In the message flow sequences 70 and 80:
- The network node/ serving cell 72 may communicate the type of the MPUE to the target cell as during the handover preparation (as part of the Handover Request message sent by the serving cell to target cell);
- Alternatively, or in addition, the network node/ serving cell 72 may communicate the type of the MPUE to the target cell for which the UE reconnects/re-establishes to after a failure. The serving cell will send the MPUE type upon receiving an RLF indication or a request to fetch the UE context.
- Alternatively, or in addition, the network node/ serving cell 72 may communicate the type of the MPUE to another trace collection entity or entity/module running MRO.

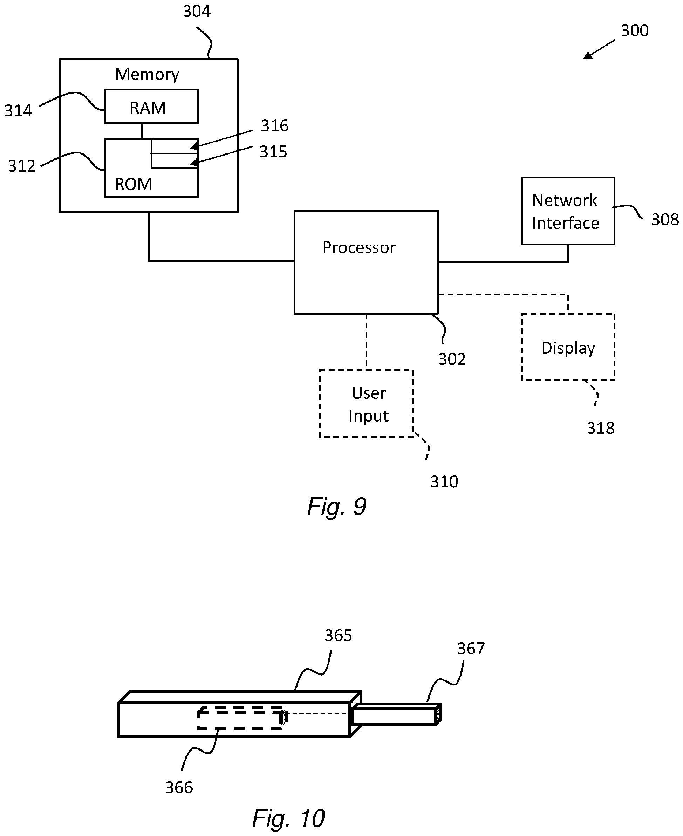

For completeness, FIG. 9 is a schematic diagram of components of one or more of the example embodiments described previously, which hereafter are referred to generically as a processing system 300. The processing system 300 may, for example, be (or may include) the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which maybe wired or wireless. The network/apparatus interface 308 may also operate as a connection to other apparatus such as device/ apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms and sequences 50, 60, 70 and 80 described above. Note that in the case of small device/ apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/ apparatus and may run partly or exclusively on the remote server device/ apparatus. These applications may be termed cloud-hosted applications. The processing system 300 may be in communication with the remote server device/ apparatus in order to utilize the software application stored there.

FIGS. 10 shows tangible media, specifically a removable memory unit 365, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. Other forms of tangible storage media may be used. Tangible media can be any device/ apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/ apparatus as instructions for a processor or configured or configuration settings for a fixed function device/apparatus, gate array, programmable logic device/ apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams and sequences of FIGS. 5 to 8 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising means for performing:
detecting rotation of a user device of a mobile communication system;
detecting a mobility event; and
generating a report indicating whether a rotation is detected during the detected mobility event or in a defined period before and/or after the mobility event.

2. An apparatus as claimed in claim 1, wherein the means for performing detecting rotation comprising means for performing:
determining whether a rotation event occurs during the mobility event or in the defined period before and/or after the mobility event.

3. An apparatus as claimed in claim 1 or claim 2, wherein the means for performing detecting rotation comprising means for performing:
determining whether a rotation event occurs during a random access procedure.

4. An apparatus as claimed in any one of the preceding claims, wherein said report is, or is appended to, a radio link failure report or a handover report.

5. An apparatus as claimed in any one of the preceding claims, wherein the report comprises:
a Boolean flag indicating whether rotation is detected during said mobility event or in the defined period before and/or after the mobility event; and/or
rotation data of said user device.

6. An apparatus as claimed in claim 5, wherein said rotation data comprises one or more of:
angular speed or velocity of the user device;
a number of rotation events in a relevant time period;
a type of rotation(s); and
duration of rotation(s).

7. An apparatus as claimed in any one of the preceding claims, wherein the user device is a multi-panel user device.

8. An apparatus comprising means for performing:
sending an information message from a user device of a mobile communication to a network node of the mobile communication system, wherein the information message includes an indication of a multi-panel type of the user device.

9. An apparatus as claimed in claim 8, further comprising means for performing:
receiving a multi-panel type request from the network node, wherein the information message is provided in response to the user information request.

10. An apparatus as claimed in claim 8 or claim 9, wherein the information message is sent in response to a mobility event.

11. An apparatus comprising means for performing:
receiving, at a network node of a mobile communication system, an information message from a user device of the mobile communication system, wherein the information message includes an indication of a multi-panel type of the user device.

12. An apparatus as claimed in claim 11, further comprising means for performing:
sending a multi-panel type request from the network node to the user device, wherein the information message is provided in response to the multi-panel type request.

13. An apparatus as claimed in any one of claims 8 to 12, wherein the multi-panel type includes:
a first type in which user device rotations and/or blockages are de-coupled from movement of a device or user holding the user device; and
a second type in which user device rotations and/or blockages are coupled with movement of the device or user holding the user device.

14. A method comprising:
detecting rotation of a multi-panel user device of a mobile communication system;
detecting a mobility event; and
generating a report indicating whether a rotation is detected during the detected mobility event or in a defined period before and/or after the mobility event.

15. A method comprising:
sending an information message from a user device of a mobile communication to a network node of the mobile communication system, wherein the information message includes an indication of a multi-panel type of the user device.
